# EUROPÄISCHE PATENTSCHRIFT

(11) **EP 0 944 423 B1**
(45) Veröffentlichungstag und Bekanntmachung des Hinweises auf die Patenterteilung: **29.10.2003**
(21) Anmeldenummer: 97942762.2
(22) Anmeldetag: 29.08.1997
(51) Int. Cl.: B01D 53/00, F26B 21/08

(54) **VERFAHREN SOWIE VORRICHTUNGEN ZUR REINIGUNG UND WIEDERVERWENDUNG VON MIT ZUSATZSTOFFEN (Z.B. LÖSUNGSMITTELN) ODER VERUNREINIGUNGEN VERSETZTER ABLUFT**
PROCESS AND DEVICES TO CLEAN AND REUSE DISPLACED OUTGOING AIR CONTAINING ADDITIVES (E.G. SOLVENTS) OR POLLUTANTS
PROCEDE ET DISPOSITIFS POUR L'EPURATION ET LA REUTILISATION D'AIR EVACUE RENFERMANT DES ADDITIFS (PAR EXEMPLE, DES SOLVANTS) OU DES IMPURETES

(30) Priorität: 30.08.1996 DE 19635075
(43) Veröffentlichungstag der Anmeldung: 29.09.1999
(73) Patentinhaber: maul & co.- Chr. Belser GmbH, 90471 Nürnberg (DE)
(72) Erfinder: HÄRLE, Rainer, D-71701 Schwieberdingen (DE); THIELEN, Gunter, D-33335 Gütersloh (DE)
(74) Vertreter: Stippl, Hubert, Dipl.-Ing.
(86) Internationale Anmeldenummer: DE9701904
(87) Internationale Veröffentlichungsnummer: WO98008590

(56) Entgegenhaltungen:
- EP-A- 0 331 611
- DE-A- 2 545 161
- DE-A- 3 907 437
- GB-A- 2 085 310
- US-A- 4 662 899

## Beschreibung

Die Erfindung betrifft ein Verfahren sowie eine Vorrichtung zur emissionslosen Reinigung und Wiederverwendung von mit Zusatzstoffen (z.B. Lösungsmitteln) oder Verunreinigungen versetzter Abluft von Trocknereinrichtungen und Maschinenkapseln von Offset-Rollendruckmaschinen im Umluftbetrieb.

Als Stand der Technik ist es zur Reinigung von Abluft bekannt, eine thermische Nachverbrennung der Abluft vorzunehmen und hierdurch die enthaltenen Zusatzstoffe und Verunreinigungen bei Temperaturen von 700 - 800° C durch Verbrennung zu beseitigen. Eine derartige Nachverbrennung ist energieaufwendig und erzeugt unerwünschte Zusatzstoffe (z.B. CO₂, Kohlenstoffe).

Der Erfindung liegt die Aufgabe zugrunde, ein Verfahren sowie eine Vorrichtung zur Reinigung von Abluft von Zusatzstoffen oder von Verunreinigungen anzubieten, bei welchem (welcher) auf eine energieaufwendige Nachverbrennung verzichtet wird und die Emissionen in die Umwelt trotz einer Verbesserung des Arbeitsplatzklimas reduziert werden.

Die Aufgabe wird in dem Verfahren durch Patentanspruch 1 mit vorteilhaften Verfahrensvarianten in den Unteransprüchen 2 - 14 gelöst. Hinsichtlich einer Vorrichtung wird die Aufgabe durch Patentanspruch 15 mit vorteilhaften Ausführungen in den weiteren Ansprüchen 16 - 30 gelöst.

Das erfindungsgemäße Verfahren sieht eine Hindurchleitung der Abluft durch mindestens einen Verflüssiger zur Auskondensation der in der Abluft enthaltenen Zusatzstoffe oder Verunreinigungen sowie eine Hindurchführung der Abluft durch mindestens ein Abscheiderelement zur weiteren Reinigung der Abluft vor.

Das erfindungsgemäße Verfahren bezieht sich insbesondere auf beim Rollen-Offsetdruck eingesetzten Farbpasten, die zu ca. 70 % aus Pigmenten und zu ca. 30 % aus hochsiedenden Mineralölen bestehen. Bisher wurden diese Mineralöle nach dem Trocknungsvorgang im Trockner freigesetzt, durch die Abluft abgesaugt und mit Hilfe von Stützgas bei hohen Temperaturen von ca. 750°C verbrannt, um hierdurch den vorgeschriebenen Gehalt an Restkohlenstoffen einzuhalten. Ferner wurden durch die Abluft auch im Bereich der Druckwerke der Druckmaschinen durch die Gummituchwaschungen freigesetzte Benzine aufgenommen und abgeführt.

Das erfindungsgemäße Verfahren nach Patentanspruch 1 ermöglicht nun eine Abluftreinigung ohne eine thermische Nachverbrennung. Die Abluft muß demnach nicht mehr auf 750°C aufgeheizt und mit Hilfe von Stützgas verbrannt werden, sondern muß nur auf eine Temperatur von etwa 160°C erwärmt werden.

Durch indirekt beheizte Trockner (also ohne offene Flamme) wird der Reinigungsluft kein Sauerstoff entzogen, so daß ohne Frischluftzuführung ein reiner Umluftbetrieb realisiert werden kann und auch in den als Arbeitsbereich genutzten Maschinenkapseln sowie der Umgebung der Druckmaschinen eine ausreichende Luftmenge für die dort beschäftigten Arbeitskräfte vorhanden ist.

Das erfindungsgemäße Verfahren sieht vor, daß die in die Maschinenkapseln, zu den Druckmaschinen und Trocknern zugeführte und gereinigte Abluft durch eine Konditionierungseinrichtung hinsichtlich der Luftparameter (z.B. Menge, Feuchtigkeit und Temperatur) derartig konditioniert wird, daß die als Arbeitsbereich genutzten Maschinenkapseln zulässige maximale Arbeitsplatzkonzentrations-Grenzwer-te (MAK-Grenzwerte) aufweisen und auch die für den jeweiligen Druckauftrag erforderlichen Prozeßparameter eingestellt werden.

Über Sensor-/Steuerstrecken in den Maschinenkapseln, an den Druckmaschinen und den Trocknern werden die jeweiligen Luftparameter (z.B. Menge, Feuchtigkeit und Temperatur) abgefragt und es erfolgt eine entsprechende Konditionierung der rückgeführten gereinigten Abluft zur Einhaltung der maximalen Arbeitsplatzkonzentrations-Grenzwerte (MAK-Grenzwerte) und der für den jeweiligen Druckauftrag erforderlichen Prozeßparameter. Der rückgeführte gereinigte Abluftstrom wird mengendosiert teilweise dem Maschinenraum bzw. der Maschinenkapsel, teilweise den Trocknern und teilweise den Druckmaschinen zugeführt.

Über Verteilerelemente kann eine individuelle Mengendosierung der in die Maschinenkapseln, Trockner und die jeweiligen Druckmaschinenbereiche zugeführten gereinigten Abluftmengen erfolgen.

Das Verfahren nach Patentanspruch 1 ermöglicht also sowohl einen emissionslosen Umluftbetrieb wie auch eine Nutzung der Arbeitsbereiche in den Maschinenkapseln. Es findet eine konstante Klimatisierung der Maschinenkapseln und der Druckmaschinenumgebung statt.

Vor der Einführung in den Verflüssiger kann die belastete Abluft vorteilhafterweise durch einen Frischluft-Wärmetauscher zum Durchlauf eines ersten Abkühlstadiums hindurchgeleitet werden, um daraufhin in dem darauffolgenden Verflüssiger eine Auskondensation der Zusatzstoffe und Verunreinigungen zu bewirken.

Durch eine Hintereinanderschaltung zweier Verflüssiger, durch welche die Abluft hindurchgeleitet wird, wird eine besonders gründliche und vollständige Auskondensation verwirklicht. Eine derartige Reihenschaltung zweier Abscheiderelemente erhöht ebenfalls den Reinheitsgrad der durchgeleiteten Abluft nach Durchlauf der Abscheiderelemente.

Eine Konzentration der im Verflüssiger und Abscheiderelement abgeschiedenen und separierten Zusatzstoffe oder Verunreinigungen erfolgt vorteilhafterweise in einem Sammler, so daß dort zusammenlaufende kondensierte Lösungsmittel wieder ihrem ursprünglichen Zweck zugeführt und zur Farbherstellung dienen können.

Zur weiteren Erhöhung der Reinigungsleistung des Verfahrens empfiehlt es sich, nach dem Verflüssiger und Abscheiderelement ein weiteres Filterelement zu verwenden, durch welches die Abluft hindurchgeleitet wird.

Vor der Rückführung der gereinigten Abluft zur erneuten Aufnahme und Absaugung von Zusatzstoffen und Verunreinigungen kann die bereits vollständig gereinigte Abluft durch eine Konditionierungsvorrichtung geleitet werden, durch welche eine Mengendosierung, eine Zumengungen von erforderlichen Frischluftmengen sowie eine Beeinflussung weiterer Luftparameter (z.B. Temperatur, Feuchtigkeit) vorgenommen werden kann.

Eine vorteilhafte Mehrfachnutzung des erfindungsgemäßen Verfahrens kann durch den Antrieb einer Turbine durch die hindurchgeleitete Abluft erzielt werden, wodurch in einem an die Turbine angeschlossenen Generator Strom zur Erzeugung von einzelnen Aggregaten des Reinigungssystems produziert wird.

Im Wege einer Kraft-Wärme-Kälte-Kopplung kann die vorliegende und zu reinigende Abluft ferner zum Betrieb eines Kälteerzeugers und eines Wärmeerzeugers verwendet werden, deren thermische Leistung jeweils an erforderlicher Stelle zur Luftkühlung bzw. Lufterwärmung verwendet werden kann.

Durch die geschilderten Möglichkeiten der mehrfachen Nutzung der zu reinigenden Abluft wird ein kostensparender Betrieb des Gesamtverfahrens ermöglicht, da zumindest ein Anteil der zur Durchführung des Verfahrens benötigten elektrischen und thermischen Energie erzeugt und zur Verfügung gestellt werden kann, ohne daß auf externe Energiequellen zurückgegriffen werden muß.

Insgesamt wird durch das Verfahren ermöglicht, daß enorme Abluftmengen von mindestens 20.000 m³/h, insbesondere jedoch mehr als 30.000 m³/h umgewälzt werden und somit im Umluftbetrieb sowohl eine konstante Klimatisierung der Maschinenkapseln und die Einhaltung dortiger MAK-Grenzwerte wie auch die Einhaltung der für die Trockner erforderlichen Prozeßparameter ermöglicht werden.

Vorteilhafterweise wird das Verfahren mit einem System zur Kraft-Wärme-Kältekopplung betrieben. Insbesondere aufgrund der beschriebenen erheblichen umgewälzten Abluftmengen bildet sich im Umluftsystem ein weitgehend von den jahreszeitlichen Außenbedingungen unabhängiges klimatisches System aus, welches unabhängig von den Jahreszeiten einen praktisch gleichbleibenden Bedarf an Wärme und Kälte aufweist, so daß ein Kraft-Wärme-Kältekopplungssystem mit sehr hoher Wirtschaftlichkeit eingesetzt werden kann.

Durch die Kraft-Wärme-Kältekopplung kann insbesondere eine Erwärmung der gereinigten Abluft in den Maschinenkapseln und in den Trocknern erfolgen.

Weiterhin kann über die Kraft-Wärme-Kältekopplung ein Kaltwasser-Wärmetauscher betrieben werden.

Durch das Verfahren kann eine Reinigung der Abluft von Zusatzstoffen, insbesondere hochsiedenden Mineralölen der eingesetzten Farbpasten von höchstens 10 mg/m³ erreicht werden.

Durch Kondensation, Agglomeration, Einsatz von Spezialabscheidern und Aktivkohle können die ausgeschiedenen Mineralöle wieder vollständig zurückgewonnen werden und zur erneuten Herstellung von Farbpasten wieder verwendet werden. Bislang konnte nur eine Rückgewinnung niederwertiger Öle erfolgen, deren Qualität nicht mehr zur erneuten Farbherstellung ausreichte.

Die erfindungsgemäße Vorrichtung, die insbesondere zur Durchführung des Verfahrens dient, weist erfindungsgemäß eine Steuer-/Regelvorrichtung mit Steuer-/Regelstrecken zur Steuerung der Konditionierungsvorrichtung auf, wobei ein Verteilerelement vorgesehen ist, um dem Trockner, der Maschinenkapsel und der Druckmaschine mengendosiert Dampf zur Wärmeleitung zuzuleiten, und ein Verteilerelement vorgesehen ist, um rückgeführte und gereinigte Abluft mengendosiert dem Trockner, der Maschinenkapsel und der Druckmaschine zuzuleiten.

Weitere Einzelheiten und Vorteile der Vorrichtung sind in den Zeichnungsfiguren näher erläutert.

Einzelne vorteilhafte Ausführungsformen der erfindungsgemäßen Vorrichtung werden anhand von Ausführungsbeispielen in den Zeichnungsfiguren genauer erläutert. Es zeigen:
- Fig. 1: ein Prinzipbild einer ersten Vorrichtungsvariante sowie
- Fig. 2: ein Prinzipbild der zweiten erfindungsgemäßen Vorrichtungsvariante.

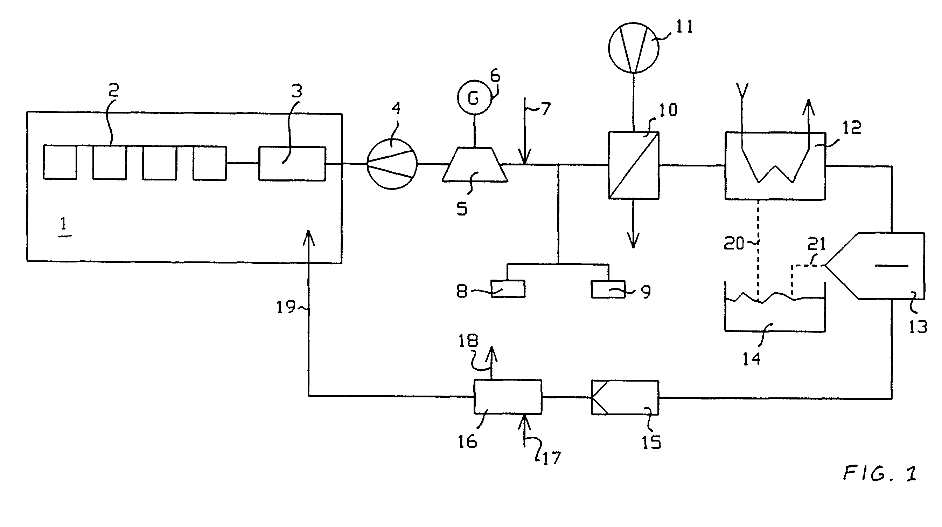

Die in Fig. 1 abgebildete Vorrichtung verdeutlicht das Verfahren und die Vorrichtung der ersten Variante am Beispiel der Abluftreinigung und Wiederverwendung von aus dem Trockner 3 einer Druckmaschine 2 abgesaugter Abluft, welche nach vollständigem Durchlauf der im folgenden näher erläuterten Stationen im gereinigten Zustand über die Rückführung 19 wieder in den Maschinenraum 1 zurückgeleitet wird und erneut verwendet werden kann.

Die Turbine 5, verbunden mit einem Generator 6, erzeugt Strom zur Versorgung der Systemaggregate. In einer weiteren Mehrfachnutzung der vorliegenden Abluft wird letztere zum Betreiben eines Wärmeerzeugers 8, insbesondere einer Absorptionswärmepumpe sowie eines Kälteerzeugers 9, insbesondere einer Absorptionskältemaschine verwendet.

Die durch den Wärmeerzeuger 8 und den Kälteerzeuger 9 erzeugte thermische Energie kann zum einen zur Temperierung und Erwärmung der Luft vor der Rückführung in den Maschinenraum 1 verwendet werden und zum anderen zur Kühlung des Verflüssigers im Systemkreislauf dienen.

Zum Ausgleich und zur Konstanthaltung der im Gesamtsystem befindlichen Luftmenge wird der belasteten Abluft erforderlichenfalls über die Frischluftzufuhr 7 eine erforderliche Luftmenge zugemischt. (Ersatz für verbrauchten Sauerstoff im Trockner der Druckmaschine).

Die belastete Abluft tritt nun mit einer Temperatur von 100 - 180° C in den Frischluftwärmetauscher 10 ein, welcher über ein Gebläse 11 betrieben wird und eine erste Abkühlung der belasteten Abluft auf etwa 70 - 50° C bewirkt.

Im darauffolgenden Durchlauf der belasteten Abluft durch den als Kaltwasser-Wärmetauscher 12 ausgeführten Verflüssiger erfolgt eine erste Auskondensation der in der Abluft enthaltenen Zusatzstoffe (z.B. der Lösungsmittel) und Verunreinigungen, wobei die kondensierten Zusatzstoffe, insbesondere das kondensierte Lösungsmittel, über einen Ablauf 20 einem Sammler 14 zugeführt wird. Die derart bereits teilweise gereinigte Abluft verläßt den Kaltwasser-Wärmetauscher 12 und durchläuft das als Teilchenabscheider 13 ausgebildete Abscheiderelement, woraufhin in einer weiteren Reinigung der Abluft die abgeschiedenen Zusatzstoffe und insbesondere Lösungsmittelteilchen über einen Ablauf 21 wiederum dem Sammler 14 zugeführt werden.

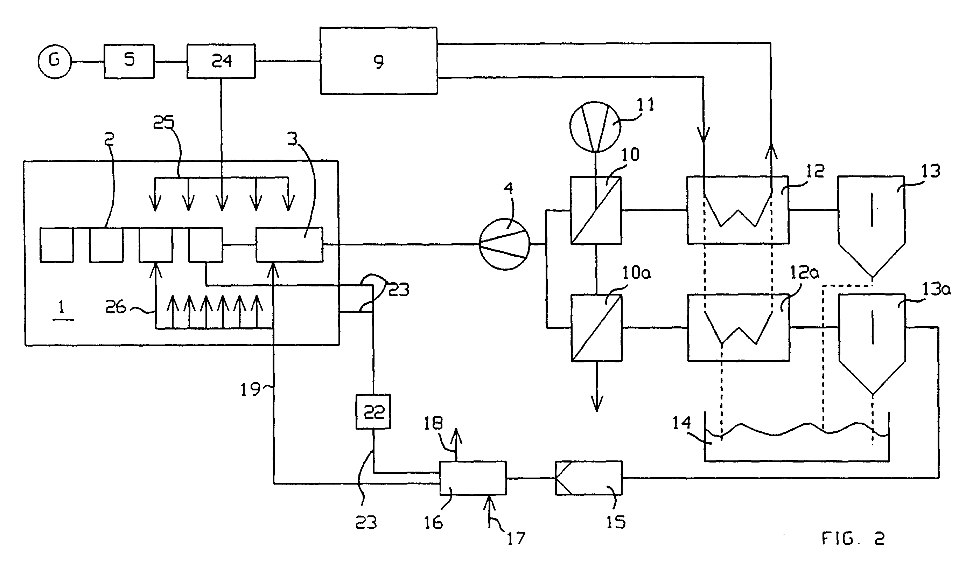

Bei der gezeigten Ausführungsvariante gemäß FIG. 2 sind dem Frischluftwärmetauscher 10, dem Kaltwasserwärmetauscher 12 und dem Teilchenabscheider 13 je ein weiterer Frischluftwärmetauscher 10a, ein Kaltwasserwärmetauscher 12a und ein Teilchenabscheider 13a parallel geschaltet derart, daß durch Umschaltelemente, die in den Zeichnungsfiguren nicht weiter dargestellt sind, der Abluftstrom entweder über die Elemente 10, 12, 13 oder alternativ dazu über die Elemente 10a, 12a und 13a geführt werden kann. Dies ist besonders vorteilhaft, weil es dann möglich ist, während eines Arbeitszyklus der Elemente 10, 12 und 13 die Elemente 10a, 12a und 13a in üblicher Weise durch Aufwärmung, beispielsweise Dampfeintrag zu reinigen bzw. zu regenerieren. Die Rückstände aus den Elementen 10, 10a, 12, 12a und 13, 13a werden gemeinsam dem Sammler 14 zugeführt.

Vorteilhafterweise ist der Sammler 14 als Lösungsmittelabscheider ausgebildet, um etwaige aus dem Kaltwasser-Wärmetauscher 12 und/oder dem Teilchenabscheider 13 auskondensierte oder abgeschiedene Wassermengen von den zusätzlich auskondensiertem oder abgeschiedenen Lösungsmittelteilchen abtrennen zu können und das derart gewonnene reine Lösungsmittel zur weiteren Verwendung (z.B. zur Farbherstellung) einsetzen zu können.

Die im momentanen Stadium bereits fast vollständig gereinigte Abluft durchläuft bei einer Temperatur von etwa 20 - 30°C nun das beispielsweise als Aktivkohlefilter ausgebildete Filterelement 15, zur weiteren und besonders gründlichen Reinigung etwaiger verbleibender Zusatzstoffe und Verunreinigungen, um daraufhin in eine Konditionierungsvorrichtung 16 einzutreten, welche zur Mengendosierung, zur Zumengung von Frischluft (über Frischlufteinlaß 17 und Luftauslaß 18) sowie zur frei wählbaren Festlegung weiterer Luftparameter (z.B. Temperatur, Feuchtigkeit) dient.

Über die Rückführung 19 wird die derart gereinigte und hinsichtlich der verschiedenen Luftparameter bestimmte Abluft als Zuluft dem Maschinenraum 1 wieder zugeführt und kann in einem weiteren Systemdurchlauf vom Trockner 3 zur Aufnahme von Zusatzstoffen und Verunreinigungen erneut angesaugt werden.

Der geschlossene bei der Absaugung des Trockners 3 beginnende und bei der Rückführung 19 abschließende geschlossene Systemkreislauf erlaubt die Verwendung von mit geringen Restbestandteilen von Zusatzstoffen und Verunreinigungen versetzter Abluft, welche gegebenenfalls über den Frischlufteinlaß 17 oder durch eine zusätzlich vorhandene Klimaanlage eingeführte Frischluft dem Maschinenraum 1 zugeführt wird.

Zusätzlich zu den bereits bei Fig. 1 beschriebenen Vorrichtungsbestandteilen weist die zweite Vorrichtungsvariante nach Fig. 2 eine Steuer-/Regelvorrichtung 22 auf, welche über Sensor-/Steuerstrecken 23, die im Maschinenraum/Maschinenkapsel 1 der Druckmaschine 2 und im Trockner 3 vorhandene Luftparameter erfaßt und über eine Steuerung/Regelung der Konditionierungseinrichtung 16, die über die Rückführung 19 zugeführte gereinigte Abluft hinsichtlich ihrer Luftparameter (z.B. Menge, Feuchtigkeit, Temperatur) an die im Maschinenraum/Maschinenkapsel 1 zulässigen maximalen Arbeitsplatzkonzentrations-Grenzwerte (MAK-Grenzwerte) sowie die für den jeweiligen Druckauftrag erforderlichen Prozeßparameter anpaßt und deren Einhaltung überwacht.

Über das Verteilerelement 26 kann die durch die Rückführung 19 rückgeführte gereinigte Abluft individuell mengendosiert der Druckmaschine 2, dem Maschinenraum/Maschinenkapsel 1 (die Begriffe Maschinenraum und Maschinenkapsel werden synonym verwendet) und dem Trockner 3 zugeführt werden.

Ein System der Kraft-Wärme-Kältekopplung mit den Systembestandteilen Turbine 5 (zum Antrieb eines Generators 6), Kessel 24 und Kälteerzeuger 9 ermöglicht ein besonders wirtschaftliches und energiesparendes Betreiben der Anlage nach Fig. 2.

Über den Kessel 24 kann über ein Verteilerelement 25 eine mengendosierte Dampfzuleitung zur Erwärmung des Maschinenraums 1, der Druckmaschine 2 und des Trockners 3 erfolgen.

Der Trockner 3 ist indirekt beheizt (also ohne offene Flamme), so daß der erwärmten gereinigten Abluft kein Sauerstoff entzogen wird. Zur indirekten Beheizung enthält der Trockner 3 Wärmetauscher (z.B. Wärmeregister). Über den Dampf des Kessels 24 wird in der Anlage nach Fig. 2 außerdem ein Kälteerzeuger 9 angetrieben, der z.B. Kaltwasser für den Kaltwasser-Wärmetauscher 12 bereitstellen kann.

## Patentansprüche

1. Verfahren zur emissionslosen Reinigung und Wiederverwendung von mit Zusatzstoffen (z.B. Lösungsmitteln, insbesondere hochsiedenden Mineralölen) oder Verunreinigungen versetzter Abluft von Trocknereinrichtungen und Maschinenkapseln von Offset-Rollendruckmaschinen, insbesondere Heatset-Offset-Rollendruckmaschinen, im Umluftbetrieb mit folgenden Verfahrensschritten:
a) Hindurchleiten der Abluft durch mindestens einen Verflüssiger zur Auskondensation der in der Abluft enthaltenen Zusatzstoffe oder Verunreinigungen und durch mindestens ein Abscheiderelement zur weiteren Reinigung der Abluft von enthaltenen kondensierten Zusatzstoffen oder Verunreinigungen,
b) Konditionierung der Luftparameter (z.B. Menge, Temperatur, Feuchtigkeit) der zur Zurückfuhrung zu den Trocknern und Maschinenkapseln vorgesehenen gereinigten Abluft zur Einhaltung der für die als Arbeitsbereich genutzten Maschinenkapseln geltenden maximalen Arbeitsplatzkonzentrations-Grenzwerten (MAK-Grenzwerten) und der erforderlichen Prozeßparameter des jeweiligen Druckauftrags,
c) Rückführung der nach dem Verfahrensschritten a) und b) behandelten gereinigten Abluft zu den Trocknern und Maschinenkapseln zur erneuten Aufnahme oder Absaugung von Zusatzstoffen oder Verunreinigungen,
d) Erwärmung der in die Trockner rückgeführten Abluft durch indirekt beheizte Trockner, ohne daß der gereinigten Abluft Sauerstoff entzogen wird sowie
e) Fortführung des Verfahrens mit Verfahrensschritt a),
**dadurch gekennzeichnet, daß**
über Sensor-/Steuerstrecken (23) Luftparameter in den Trocknern, Maschinenkapseln und Druckmaschinen erfaßt werden und eine entsprechende Konditionierung der rückgeführten gereinigten Abluft zur Einhaltung der maximalen Arbeitsplatzkonzentrations-Grenzwerte (MAK-Grenzwerte) und der für den jeweiligen Druckauftrag erforderlichen Prozeßparameter erfolgt sowie der rückgeführte gereinigte Abluftstrom mengendosiert teilweise dem Maschinenraum bzw. der Maschinenkapsel, teilweise den Trocknern und teilweise den Druckmaschinen zugeführt wird.

2. Verfahren nach Anspruch 1,
**dadurch gekennzeichnet, daß**
die Abluft vor der Durchführung von Verfahrensschritt a) nach Anspruch 1 durch einen Frischluftwärmetauscher (10) hindurchgeleitet wird.

3. Verfahren nach einem der vorhergehenden Ansprüche,
**dadurch gekennzeichnet, daß**
die Abluft zur Durchführung von Verfahrensschritt a) nach Anspruch 1 durch zwei hintereinander geschaltete Verflüssiger zur Auskondensation hindurchgeleitet wird.

4. Verfahren nach einem der vorhergehenden Ansprüche,
**dadurch gekennzeichnet, daß**
die Abluft zur Durchführung von Verfahrensschritt b) nach Anspruch 1 durch zwei hintereinander geschaltete Abscheiderelemente hindurchgeleitet wird.

5. Verfahren nach einem der vorhergehenden Ansprüche,
**dadurch gekennzeichnet, daß**
die im Verflüssiger und/oder Abscheiderelement durch Auskondensation und/oder Abscheidung separierten Zusatzstoffe oder Verunreinigungen einem Sammler (14) zugeführt werden.

6. Verfahren nach einem der vorhergehenden Ansprüche,
**dadurch gekennzeichnet, daß**
die Abluft nach Durchführung von Verfahrensschritt b) und vor der Durchführung von Verfahrensschritt c) nach Anspruch 1 durch ein Filterelement (15) zur weiteren Reinigung hindurchgeleitet wird.

7. Verfahren nach einem der vorhergehenden Ansprüche,
**dadurch gekennzeichnet, daß**
die Abluft nach der Durchführung von Verfahrensschritt b) nach Anspruch 1 durch eine Konditionierungsvorrichtung (16) zur Mengendosierung und/oder Zumengung von Frischluft und/oder Temperierung und/oder Trocknung und/oder Befeuchtung hindurchgeleitet wird.

8. Verfahren nach einem der vorhergehenden Ansprüche,
**dadurch gekennzeichnet, daß**
die Abluft eine Turbine (5) und einen mit letzterer verbundenen Generator (6) zur Stromerzeugung antreibt.

9. Verfahren nach einem der vorhergehenden Ansprüche,
**dadurch gekennzeichnet, daß**
die Abluft einen Kälte erzeuger und/oder einen Wärmeerzeuger antreibt.

10. Verfahren nach einem der vorhergehenden Ansprüche,
**dadurch gekennzeichnet, daß**
im Umluftverfahren eine Abluftmenge von mindestens 20.000m³/h, insbesondere mindestens 30.000m³/h umgewälzt werden.

11. Verfahren nach einem der vorhergehenden Ansprüche,
**dadurch gekennzeichnet, daß**
über eine Kraft-Wärme-Kältekopplung Strom, Wärme und Kälte, insbesondere zum Betrieb des Verfahrens, erzeugt werden.

12. Verfahren nach Anspruch 11,
**dadurch gekennzeichnet, daß**
über die Kraft-Wärme-Kältekopplung eine Erwärmung der gereinigten Abluft für den Trockner und die Maschinenkapsel erfolgt.

13. Verfahren nach Anspruch 11 oder 12,
**dadurch gekennzeichnet, daß**
über die Kraft-Wärme-Kältekopplung ein Kaltwasser-Wärmetauscher betrieben wird.

14. Verfahren nach einem der vorhergehenden Ansprüche,
**dadurch gekennzeichnet, daß**
die in den Trockner und die Maschinenkapsel rückgeführte Abluft einen Restgehalt von Zusatzstoffen (z.B. Lösungsmittel, insbesondere hochsiedenden Mineralölen) von höchstens 10 mg/m³ aufweist.

15. Vorrichtung zur emissionslosen Reinigung und Wiederverwendung von mit Zusatzstoffen (z.B. Lösungsmitteln, insbesondere hochsiedenden Mineralölen) oder Verunreinigungen versetzter Abluft von Trocknern und Maschinenkapseln von Offset-Rollendruckmaschinen, insbesondere Heatset-Offset-Rollendruckmaschinen, im Umluftverfahren
**mit folgenden Merkmalen:**
a) einem geschlossenen Rohrsystem zur Reinigung und Rückführung der Abluft zur erneuten Aufnahme oder Absaugung von Zusatzstoffen oder Verunreinigungen,
b) mindestens einem in das Rohrsystem integrierten Verflüssiger zur Auskondensation der in der Abluft enthaltenen Zusatzstoffe oder Verunreinigungen,
c) mindestens einem in dem Rohrsystem enthaltenen Abscheiderelement zur Reinigung der Abluft von kondensierten Zusatzstoffen oder Verunreinigungen,
d) mindestens einem indirekt beheizten Trockner (3) zur Erwärmung der gereinigten Abluft, ohne das der Abluft Sauerstoff entzogen wird sowie
e) eine Konditionierungseinrichtung (16) zur Konditionierung der Luftparameter (z.B. Menge, Feuchtigkeit, Temperatur) der Zurückführung zum Trockner (3) und zu den Maschinenkapseln vorgesehenen gereinigten Abluft zur Einhaltung der für die als Arbeitsbereich genutzten Maschinenkapseln geltenden maximalen Arbeitsplatzkonzentrations-Grenzwerten (MAK-Grenz-werten) sowie der erforderlichen Prozeßparameter für den jeweiligen Druckauftrag,
**dadurch gekennzeichnet, daß**
eine Steuer-/Regelvorrichtung (22) mit Steuer-/Regelstrecken (23) zur Steuerung der Konditionierungsvorrichtung (16) vorgesehen ist, wobei eine Verteilerelement (25) vorgesehen ist, um dem Trockner (3), der Maschinenkapsel (1) und der Druckmaschine (2) mengendosiert Dampf zur Erwärmung zuzuleiten, und ein Verteilerelement (26) vorgesehen ist, um rückgeführte und gereinigte Abluft mengendosiert dem Trockner (3), der Maschinenkapsel (1) und der Druckmaschine (2) zuzuleiten.

16. Vorrichtung nach Anspruch 15,
**dadurch gekennzeichnet, daß**
ein System zur Kraft-Wärme-Kältekopplung mit einer Turbine (5), einem Kessel (6) und einem Kälteerzeuger (9) vorgesehen ist.

17. Vorrichtung nach einem der vorhergehenden Ansprüche 15 oder 16,
**dadurch gekennzeichnet, daß**
ein Frischluftwärmetauscher (10) vorgesehen ist.

18. Vorrichtung nach einem der Ansprüche 15 - 17,
**dadurch gekennzeichnet, daß**
der Verflüssiger als Kaltwasser-Wärmetauscher (12) ausgebildet ist.

19. Vorrichtung nach einem der Ansprüche 15 - 18,
**dadurch gekennzeichnet, daß**
das Abscheiderelement als Teilchenabscheider (13) ausgebildet ist.

20. Vorrichtung nach einem der Ansprüche 15 - 19,
**dadurch gekennzeichnet, daß**
ein Sammler (14) zur Aufnahme der im Verflüssiger und/oder Abscheiderelement separierten Zusatzstoffe oder Verunreinigungen vorgesehen ist.

21. Vorrichtung nach Anspruch 20,
**dadurch gekennzeichnet, daß**
der Sammler (14) als Lösungsmittelabscheider zur Trennung eines aufgenommenen Gemisches aus Wasser und Lösungsmittel ausgebildet ist.

22. Vorrichtung nach einem der Ansprüche 15 - 21,
**dadurch gekennzeichnet, daß**
das ein Filterelement (15) zur weiteren Reinigung der Abluft vorgesehen ist.

23. Vorrichtung nach Anspruch 22,
**dadurch gekennzeichnet, daß**
das Filterelement (15) als Aktivkohlefilter ausgebildet ist.

24. Vorrichtung nach einem der Ansprüche 15 - 23,
**dadurch gekennzeichnet, daß**
das eine Konditionierungsvorrichtung (16) zur Mengendosierung und/oder Zumengung von Frischluft und/oder Temperierung und/oder Trocknung und/oder Befeuchtung vorgesehen ist, welche einen Frischlufteinlaß (17) und einen Luftauslaß (18) aufweist.

25. Vorrichtung nach einem der Ansprüche 15 - 24,
**dadurch gekennzeichnet, daß**
eine durch die Abluft angetriebene Turbine (5) zum Antrieb eines Generators (6) zur Stromerzeugung und Stromversorgung von Aggregaten des Systems vorgesehen ist.

26. Vorrichtung nach einem der Ansprüche 15 - 25,
**dadurch gekennzeichnet, daß**
daß ein durch die Abluft angetriebener Kälteerzeuger (9), insbesondere zur Kühlung des Kaltwasser-Wärmetauschers (12), vorgesehen ist.

27. Vorrichtung nach einem der Ansprüche 15 - 26,
**dadurch gekennzeichnet, daß**
ein durch die Abluft angetriebener Wärmeerzeuger (8) zur Temperierung der (rückgeführten und gereinigten) Abluft vorgesehen ist.

28. Vorrichtung nach einem der Ansprüche 15 - 27,
**dadurch gekennzeichnet, daß**
der Kälteerzeuger (9) als Absorptionskältemaschine und/oder der Wärmeerzeuger (8) als Absorptionswärmepumpe ausgebildet sind.

29. Vorrichtung nach einem der Ansprüche 15 bis 28,
**dadurch gekennzeichnet, daß**
der indirekt beheizte Trockner (3) Wärmetauscher (z.B. Wärmeregister) aufweist.

30. Vorrichtung nach Anspruch 29,
**dadurch gekennzeichnet, daß**
der indirekt beheizte Trockner (3) mit dem Kessel (6) des Systems zur Kraft-Wärme-Kältekopplung verbunden ist.

## Claims

1. A process for the non-emission purification and re-use of waste air mixed with additives (for example solvents, especially high-boiling mineral oils) or impurities from drying apparatuses and machine enclosures of web-fed offset printing machines, especially web-fed heat-set offset printing machines, in air recirculation operation, comprising the following process steps:
a) passing the waste air through at least one condenser to condense out the additives or impurities contained in the waste air, and through at least one separator element for further cleaning the waste air of condensed additives or impurities contained therein,
b) conditioning the air parameters (for example quantity, temperature, humidity) of the purified waste air intended for return to the dryers and machine enclosures in order to comply with the maximum workplace concentration limits (MAC limits) applying to the machine enclosures used as the work area and to comply with the required process parameters of the respective print job,
c) returning the purified waste air treated in accordance with process steps a) and b) to the dryers and machine enclosures for renewed uptake or suction-removal of additives or impurities,
d) heating the waste air returned to the dryers by indirectly heated dryers without removing oxygen from the purified waste air and
e) resuming the process with process step a),
**characterised in that**
air parameters in the dryers, machine enclosures and printing machines are detected by means of sensor/control sections (23) and appropriate conditioning of the returned purified waste air is carried out in order to comply with the maximum workplace concentration limits (MAC limits) and with the process parameters required for the respective print job, and the returned purified waste air stream is fed in metered quantities partly to the machine space or machine enclosure, partly to the dryers and partly to the printing machines.

2. A process according to claim 1,
**characterised in that,**
before performing process step a) according to claim 1, the waste air is passed through a fresh-air heat exchanger (10).

3. A process according to either of the preceding claims,
**characterised in that,**
for performing process step a) according to claim 1, the waste air is passed for the condensing-out operation through two condensers connected in series.

4. A process according to any one of the preceding claims,
**characterised in that,**
for performing process step b) according to claim 1, the waste air is passed through two separator elements connected in series.

5. A process according to any one of the preceding claims,
**characterised in that**
the additives or impurities separated in the condenser and/or the separator element by condensing-out and/or separation are fed to a collector (14).

6. A process according to any one of the preceding claims,
**characterised in that,**
after performing process step b) and before performing process step c) according to claim I, the waste air is passed through a filter element (15) for further purification.

7. A process according to any one of the preceding claims,
**characterised in that,**
after performing process step b) according to claim 1, the waste air is passed through a conditioning device (16) for quantity metering and/or admixture of fresh air and/or temperature adjustment and/or drying and/or humidifying.

8. A process according to any one of the preceding claims,
**characterised in that**
the waste air drives a turbine (5) and a generator (6) connected to the latter for generating current.

9. A process according to any one of the preceding claims,
**characterised in that**
the waste air drives a cold generator and/or a heat generator.

10. A process according to any one of the preceding claims,
**characterised in that,**
in the air recirculation process, a waste air quantity of at least 20,000 m³/h, especially at least 30,000 m³/h, is circulated.

11. A process according to any one of the preceding claims,
**characterised in that**
current, heat and cold, especially for operating the process, are generated by means of a power-heat-cold combination.

12. A process according to claim 11,
**characterised in that**
heating of the purified waste air for the dryer and the machine enclosure is carried out by means of the power-heat-cold combination.

13. A process according to claim 11 or 12,
**characterised in that**
a cold water heat exchanger is operated by means of the power-heat-cold combination.

14. A process according to any one of the preceding claims,
**characterised in that**
the waste air returned to the dryer and the machine enclosure has a residual content of additives (for example solvents, especially high-boiling mineral oils) of not more than 10 mg/m³.

15. An apparatus for the non-emission purification and re-use of waste air mixed with additives (for example solvents, especially high-boiling mineral oils) or impurities from dryers and machine enclosures of web-fed offset printing machines, especially web-fed heat-set offset printing machines, in an air recirculation process,
**comprising the following features:**
a) a closed pipe system for purifying and returning the waste air for renewed uptake or suction-removal of additives or impurities,
b) at least one condenser, integrated in the pipe system, for condensing-out the additives or impurities contained in the waste air,
c) at least one separator element, contained in the pipe system, for cleaning the waste air of condensed additives or impurities,
d) at least one indirectly heated dryer (3) for heating the purified waste air without removing oxygen from the waste air, and
e) a conditioning device (16) for conditioning the air parameters (for example quantity, humidity, temperature) of the purified waste air intended for return to the dryer (3) and to the machine enclosures in order to comply with the maximum workplace concentration limits (MAC limits) applying to the machine enclosures used as the work area and to comply with the required process parameters for the respective print job,
**characterised in that**
a control/regulating device (22) with control/regulating sections (23) is provided for controlling the conditioning device (16), a distributor element (25) being provided for feeding steam in metered quantities to the dryer (3), the machine enclosure (1) and the printing machine (2) for heating purposes, and a distributor element (26) being provided for feeding returned and purified waste air in metered quantities to the dryer (3), the machine enclosure (1) and the printing machine (2).

16. An apparatus according to claim 15,
**characterised in that**
a system for power-heat-cold combination comprising a turbine (5), a boiler (6) and a cold generator (9) is provided.

17. An apparatus according to either of the preceding claims 15 and 16,
**characterised in that**
a fresh-air heat exchanger (10) is provided.

18. An apparatus according to any one of claims 15 to 17,
**characterised in that**
the condenser is in the form of a cold water heat exchanger (12).

19. An apparatus according to any one of claims 15 to 18,
**characterised in that**
the separator element is in the form of a particle separator (13).

20. An apparatus according to any one of claims 15 to 19,
**characterised in that**
a collector (14) is provided for receiving the additives or impurities separated in the condenser and/or the separator element.

21. An apparatus according to claim 20,
**characterised in that**
the collector (14) is in the form of a solvent separator for separation of a received mixture of water and solvent.

22. An apparatus according to any one of claims 15 to 21,
**characterised in that**
a filter element (15) is provided for further purification of the waste air.

23. An apparatus according to claim 22,
**characterised in that**
the filter element (15) is in the form of an activated carbon filter.

24. An apparatus according to any one of claims 15 to 23,
**characterised in that**
a conditioning device (16) is provided for quantity metering and/or admixture of fresh air and/or temperature adjustment and/or drying and/or humidifying, which conditioning device (16) has a fresh-air inlet (17) and an air outlet (18).

25. An apparatus according to any one of claims 15 to 24,
**characterised in that**
a turbine (5) driven by the waste air is provided for driving a generator (6) for generating current and supplying current to units of the system.

26. An apparatus according to any one of claims 15 to 25,
**characterised in that**
a cold generator (9) driven by the waste air is provided, especially for cooling the cold water heat exchanger (12).

27. An apparatus according to any one of claims 15 to 26,
**characterised in that**
a heat generator (8) driven by the waste air is provided for giving a certain temperature to the (returned and purified) waste air.

28. An apparatus according to any one of claims 15 to 27,
**characterised in that**
the cold generator (9) is in the form of an absorption refrigerating machine and/or the heat generator (8) is in the form of an absorption heat pump.

29. An apparatus according to any one of claims 15 to 28,
**characterised in that**
the indirectly heated dryer (3) has heat exchangers (for example heat registers).

30. An apparatus according to claim 29,
**characterised in that**
the indirectly heated dryer (3) is connected to the boiler (6) of the system for power-heat-cold combination.

## Revendications

1. Procédé pour l'épuration et la réutilisation sans émissions d'air évacué, mélangé à des additifs (par exemple, des solvants, en particulier des huiles minérales à point d'ébullition élevé) ou. à des impuretés, provenant d'installations de séchage et d'encoffrements ou d'encapsulages de rotatives offset, en particulier de rotatives offset à encre thermoséchante, en mode air recyclé avec les étapes de procédé suivantes :
a) conduite de l'air évacué à travers au moins un condenseur pour l'élimination par condensation des additifs ou des impuretés contenus dans l'air évacué et à travers au moins un élément de séparation pour l'élimination complémentaire des additifs ou impuretés condensés de l'air évacué,
b) conditionnement des paramètres (par exemple, quantité, température, humidité) de l'air évacué épuré prévu pour la reconduite vers les sécheurs et les encoffrements de machines afin de respecter les valeurs limites maximales de concentration sur le lieu de travail (valeurs limites CMA) en vigueur pour les encoffrements de machines utilisés en tant que zone de travail et les paramètres de processus nécessaires de la tâche d'impression respective,
c) reconduite de l'air épuré, traité selon les étapes de procédé a) et b), vers les sécheurs et les encoffrements de machines pour le recueil ou l'aspiration renouvelé d'additifs ou d'impuretés,
d) réchauffement de l'air évacué reconduit dans les sécheurs par des sécheurs indirectement chauffés sans retirer de l'oxygène de l'air évacué épuré ainsi que
e) poursuite du procédé avec l'étape de procédé a),
**caractérisé en ce que** des paramètres de l'air, dans les sécheurs, les encoffrements de machines et les machines d'impression, sont relevés par le biais de sections de captage/de commande (23) et **en ce qu'**il se produit un conditionnement correspondant de l'air évacué épuré reconduit afin de respecter les valeurs limites maximales de concentration sur le lieu de travail (valeurs limites CMA) et les paramètres de processus nécessaires pour la tâche d'impression respective et **en ce que** le flux d'air évacué épuré reconduit est amené, avec dosage de la quantité, en partie vers la salle des machines respectivement l'encoffrement de machines, en partie vers les sécheurs et en partie vers les machines d'impression.

2. Procédé selon la revendication 1,
**caractérisé en ce que**
l'air évacué est conduit à travers un échangeur thermique à air frais (10) avant l'exécution de l'étape de procédé a) selon la revendication 1.

3. Procédé selon l'une des revendications précédentes,
**caractérisé en ce que**
l'air évacué est conduit à travers deux condenseurs montés l'un après l'autre, pour l'élimination par condensation, afin d'exécuter l'étape de procédé a) selon la revendication 1.

4. Procédé selon l'une quelconque des revendications précédentes,
**caractérisé en ce que**
l'air évacué est conduit à travers deux éléments séparateurs montés l'un après l'autre pour l'exécution de l'étape de procédé b) selon la revendication 1.

5. Procédé selon l'une quelconque des revendications précédentes,
**caractérisé en ce que**
les additifs ou les impuretés, triés par condensation et/ou séparation dans le condenseur et/ou l'élément séparateur, sont amenés vers un collecteur (14).

6. Procédé selon l'une quelconque des revendications précédentes,
**caractérisé en ce que**
l'air évacué est conduit à travers un élément de filtrage (15), pour épuration complémentaire, après exécution de l'étape de procédé b) et avant exécution de l'étape de procédé c) selon la revendication 1.

7. Procédé selon l'une quelconque des revendications précédentes,
**caractérisé en ce que**
l'air évacué est conduit à travers un dispositif de conditionnement (16) pour dosage de la quantité et/ou ajout d'air frais et/ou climatisation et/ou séchage et/ou humidification, après l'exécution de l'étape de procédé b) selon la revendication 1.

8. Procédé selon l'une quelconque des revendications précédentes,
**caractérisé en ce que**
l'air évacué actionne une turbine (5) et un générateur (6), relié à cette dernière, pour la production de courant.

9. Procédé selon l'une quelconque des revendications précédentes,
**caractérisé en ce que**
l'air évacué actionne un générateur de froid et/ou de chaleur.

10. Procédé selon l'une quelconque des revendications précédentes,
**caractérisé en ce que**,
dans le procédé d'air recyclé, une quantité d'air évacué d'au moins 20 000 m³/h, en particulier d'au moins 30 000 m³/h, est remise en circulation.

11. Procédé selon l'une quelconque des revendications précédentes,
**caractérisé en ce que**,
par l'intermédiaire d'un couplage énergie-chaleur-froid, on génère du courant, de la chaleur et du froid, en particulier pour le fonctionnement du procédé.

12. Procédé selon la revendication 11,
**caractérisé en qu'**
il se produit, par l'intermédiaire du couplage énergie-chaleur-froid, un réchauffement de l'air évacué épuré pour le sécheur et l'encoffrement de machines.

13. Procédé selon la revendication 11 ou 12,
**caractérisé en qu'**
un échangeur thermique à eau froide est actionné par le biais du couplage énergie-chaleur-froid.

14. Procédé selon l'une quelconque des revendications précédentes,
**caractérisé en ce que**
l'air évacué reconduit dans le sécheur et dans l'encoffrement de machines présente une teneur résiduelle en additifs (par exemple, des solvants, en particulier des huiles minérales à point d'ébullition élevé) de 10 mg/m³ maximum.

15. Dispositif pour l'épuration et la réutilisation sans émissions d'air évacué, mélangé à des additifs (par exemple, des solvants, en particulier des huiles minérales à point d'ébullition élevé) ou à des impuretés, provenant de sécheurs et d'encoffrements ou d'encapsulages de rotatives offset, en particulier de rotatives offset à encre thermoséchante, dans un procédé d'air recyclé,
avec les caractéristiques suivantes :
a) un système de conduites fermé pour l'épuration et la reconduite de l'air évacué, pour le captage ou l'aspiration renouvelé d'additifs ou d'impuretés,
b) au moins un condenseur intégré dans le système de conduites pour l'élimination par condensation des additifs ou des impuretés contenus dans l'air évacué,
c) au moins un élément séparateur contenu dans le système de conduites pour l'élimination des additifs ou des impuretés condensés de l'air évacué,
d) au moins un sécheur (3) chauffé indirectement pour le réchauffement de l'air évacué épuré, sans retirer de l'oxygène de l'air évacué ainsi que
e) un dispositif de conditionnement (16) pour le conditionnement des paramètres (par exemple, quantité, humidité, température) de l'air épuré prévu pour être reconduit vers le sécheur (3) et les encoffrements de machines afin de respecter les valeurs limites maximales de concentration sur le lieu de travail (valeurs limites CMA) en vigueur pour les encoffrements de machines utilisés en tant que zone de travail et les paramètres de processus nécessaires pour la tâche d'impression respective,
**caractérisé en ce qu'**
un dispositif de commande/réglage (22) avec des sections de commande/réglage (23) est prévu pour la commande du dispositif de conditionnement (16), un élément distributeur (25) étant prévu afin d'amener de la vapeur de manière dosée vers le sécheur (3), l'encoffrement de machines (1) et la machine d'impression (2) pour le réchauffement, et un élément distributeur (26) étant prévu pour amener l'air évacué épuré et reconduit, de manière dosée, vers le sécheur (3), l'encoffrement de machines (1) et la machine d'impression (2).

16. Dispositif selon la revendication 15,
**caractérisé en ce qu'**
un système est prévu, pour le couplage énergie-chaleur-froid, avec une turbine (5), une chaudière (6) et un générateur de froid (9).

17. Dispositif selon l'une des revendications précédentes 15 ou 16,
**caractérisé en ce qu'**
un échangeur thermique à air frais (10) est prévu.

18. Dispositif selon l'une des revendications 15-17,
**caractérisé en ce que**
le condenseur est configuré en tant qu'échangeur thermique à eau froide (12).

19. Dispositif selon l'une des revendications 15-18,
**caractérisé en ce que**
l'élément séparateur est configuré en tant que séparateur de particules (13).

20. Dispositif selon l'une des revendications 15-19,
**caractérisé en ce qu'**
un collecteur (14) est prévu pour le recueil des additifs ou des impuretés triés dans le condenseur et/ou l'élément de séparation.

21. Dispositif selon la revendication 20,
**caractérisé en ce que**
le collecteur (14) est configuré en tant que séparateur de solvants pour la séparation d'un mélange recueilli d'eau et de solvant.

22. Dispositif selon l'une des revendications 15-21,
**caractérisé en ce qu'**
un élément de filtrage (15) est prévu pour l'épuration complémentaire de l'air évacué.

23. Dispositif selon la revendication 22,
**caractérisé en ce que**
l'élément de filtrage (15) est configuré en tant que filtre à charbon actif.

24. Dispositif selon l'une des revendications 15-23,
**caractérisé en ce qu'**
un dispositif de conditionnement (16) est prévu pour le dosage de la quantité et/ou l'ajout d'air frais et/ou la climatisation et/ou le séchage et/ou l'humidification, lequel dispositif de conditionnement présente une entrée d'air frais (17) et une sortie d'air (18).

25. Dispositif selon l'une des revendications 15-24,
**caractérisé en ce qu'**
une turbine (5), actionnée par l'air évacué, est prévue pour l'actionnement d'un générateur (6), pour la production de courant et l'alimentation en courant d'unités du système.

26. Dispositif selon l'une des revendications 15-25,
**caractérisé en ce qu'**
un générateur de froid (9), actionné par l'air évacué, est prévu en particulier pour le refroidissement de l'échangeur thermique à eau froide (12).

27. Dispositif selon l'une des revendications 15-26,
**caractérisé en ce qu'**
un générateur de chaleur (8), actionné par l'air évacué, est prévu pour la climatisation de l'air évacué (reconduit et épuré).

28. Dispositif selon l'une des revendications 15-27,
**caractérisé en ce qu'**
un générateur de froid (9) est configuré en tant que machine frigorifique à absorption et/ou le générateur de chaleur (8) est configuré en tant que pompe à chaleur à absorption.

29. Dispositif selon l'une des revendications 15 à 28,
**caractérisé en ce que**
le sécheur (3) indirectement chauffé présente des échangeurs thermiques (par exemple, des registres de chaleur).

30. Dispositif selon la revendication 29,
**caractérisé en ce que**
le sécheur (3) indirectement chauffé est relié à la chaudière (6) du système pour le couplage énergie-chaleur-froid.
